# EUROPEAN PATENT SPECIFICATION

(11) **EP 3 747 840 B1**
(45) Date of publication and mention of the grant of the patent: **20.03.2024**
(21) Application number: 19746635.2
(22) Date of filing: 30.01.2019
(51) Int. Cl.: C03C 3/097, C03C 3/062, G02B 1/00, C03C 3/064, G02B 1/11

(54) **OPTICAL GLASS AND OPTICAL COMPONENT**
OPTISCHES GLAS UND OPTISCHE KOMPONENTE
VERRE OPTIQUE ET ÉLÉMENT OPTIQUE

(30) Priority: 31.01.2018 JP 2018015906
(43) Date of publication of application: 09.12.2020
(73) Proprietor: AGC INC., Chiyoda-ku, Tokyo 1008405 (JP)
(72) Inventor: AMMA Shinichi, Tokyo 100-8405 (JP); NAGASHIMA Tatsuo, Tokyo 100-8405 (JP)
(74) Representative: Müller-Boré & Partner Patentanwälte PartG mbB
(86) International application number: PCT/JP2019/003146
(87) International publication number: WO 2019/151316

(56) References cited:
- WO-A1-2016/190303
- WO-A1-2017/208995
- JP-A- S6 287 432
- JP-A- S6 287 432
- JP-A- H01 148 726
- JP-A- H01 148 726
- JP-A- 2004 126 530
- JP-A- 2007 169 157
- JP-A- 2013 227 216
- JP-A- 2013 227 216
- JP-A- 2014 125 408
- US-A1- 2007 149 381
- US-A1- 2014 106 174
- US-A1- 2015 353 407

## Description

### TECHNICAL FIELD

The present invention relates to an optical glass and an optical member.

### BACKGROUND ART

Glass to be used for wearable devices, for example, glasses with a projector, glasses/goggles with display, VR/AR display and a virtual image display device is required to have high refractive index so as to achieve a wide angle of an image, to achieve high brightness and high contrast, to improve light guide properties, to improve processability of a diffraction grating, etc. Further, heretofore, a small size imaging glass lens with a wide imaging field angle has been used for on-vehicle cameras, visual sensors for robot, etc., and such an imaging glass lens is required to have high refractive index so as to photograph a wider range with a smaller device.

Optical glass to be used for the above application is required to have a low density, so as to achieve a good feeling of wear of a user, and to reduce the weight of the whole device since automobiles and robots are required to be light in weight. Further, considering the use in the external environment, it is required to undergo less surface deterioration or regeneration by acid rain or by a chemical such as a detergent used for cleaning or wax.

With respect to an on-vehicle glass lens, for example, an attempt has been made to increase the refractive index and strength and further to improve acid resistance and water resistance by using a lens glass material for on-vehicle cameras having predetermined acid resistance (for example, Patent Document 1).

### PRIOR ART DOCUMENTS

### PATENT DOCUMENTS

### Patent Document 1: JP-A-2013-256446

Further, JP 2013 227216 A describes an optical glass having high dispersion characteristics and being suitable for correcting chromatic aberration, as well as a glass material for press molding made of the optical glass, an optical element, a method for manufacturing the same, and a method for manufacturing an optical element blank;
US 2007/149381 A1 describes an optical glass, the use of such a glass, optical elements or preforms of such optical elements, a method for producing such optical elements, and optical parts or optical components comprising such optical elements;
US 2015/353407 A1 describes an optical glass with a high refractive index, which is allegedly excellent in both devitrification resistance in a molten state and devitrification resistance during reheating, and a glass material for press molding and an optical element which are comprised of the optical glass;
JP S62 87432 A describes an optical glass for the purpose of producing an optical element having a spherical surface and an aspherical surface and which does not require a polishing step by performing a one-sided dense press in the above; and
JP H01 148726 A describes an optical glass for precision press lenses that can be press-formed at low temperatures.

### DISCLOSURE OF INVENTION

### TECHNICAL PROBLEM

However, in order to achieve a composition having high refractive index, a heavy metal oxide is used in many cases as a glass constituent to increase the refractive index. Therefore, in general, the high refractive index glass has a high density.

Further, for wearable devices, glass formed into a plate shape is sometimes used, and such glass is sometimes produced by a forming process with a high production efficiency, such as float process, fusion process or roll out process. For efficient production, the relation between the temperature at the time of production and the glass viscosity is important.

Further, when glass is used as an optical member, the visible light transmittance is also one of important parameters, and if high refractive index glass is molten at high temperature, the visible light transmittance particularly in short wavelength may decreases. On the other hand, if the viscosity curve is steep, it tends to be difficult to control the viscosity at the time of production.

Under these circumstances, the present invention has been made to solve the above problems, and its object is to provide an optical glass having high refractive index and a low density and having favorable production properties.

### SOLUTION TO PROBLEM

The optical glass of the present invention and the optical member comprising the same are defined in the appended set of claims.

### ADVANTAGEOUS EFFECTS OF INVENTION

According to the present invention, it is possible to provide an optical glass having high refractive index and a low density, having favorable production properties, and being suitable as an optical member for wearable devices, on-vehicle devices, members for robots, etc.

### BRIEF DESCRIPTION OF DRAWINGS

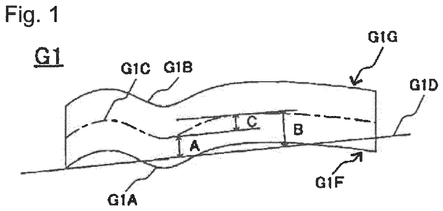

Fig. 1 is a cross sectional view schematically illustrating an optical glass to describe warpage of the optical glass.

### DESCRIPTION OF EMBODIMENTS

Now, embodiments of an optical glass and an optical member of the present invention will be described.

### [Optical glass]

The optical glass of the present invention has predetermined refractive index (n_{d}), density (d) and melting properties as mentioned above, and these properties will be described below.

The optical glass of the present invention has high refractive index (n_{d}) within a range of from 1.71 to 2.00. The optical glass of the present invention, which has refractive index (n_{d}) of at least 1.71, is suitable as an optical glass to be used for wearable devices, to achieve a wide angle of an image, to achieve high brightness and high contrast, to improve light guide properties, to achieve processing easiness of a diffraction grating, etc. Further, it is suitable as a small size imaging glass lens with a wide imaging field angle to be used for on-vehicle cameras, visual sensors for robot, etc., so as to photograph a wider range with a smaller device.

The refractive index (n_{d}) is preferably at least 1.75, more preferably at least 1.78, further preferably at least 1.81, further preferably at least 1.84, further preferably at least 1.87, further preferably at least 1.90, further preferably at least 1.93.

On the other hand, glass having refractive index (n_{d}) of higher than 2.00 tends to have a high density and tends to have too high devitrification temperature. Particularly in a case where the density of the optical glass being low is important, the refractive index (n_{d}) is preferably at most 1.97, more preferably at most 1.94, further preferably at most 1.91, still more preferably at most 1.88.

The optical glass of the present invention has density (d) of at most 5.0 g/cm³. The optical glass of the present invention, which has density within the above range, can achieve favorable feeling of wear of a user when used for wearable devices, and can reduce the weight of the whole device when used for on-vehicle cameras, visual sensors for robot, etc. The density (d) is preferably at most 4.6 g/cm³, more preferably at most 4.2 g/cm³, further preferably at most 3.8 g/cm³.

On the other hand, in order to prevent the glass surface from being scarred, the density (d) of the optical glass of the present invention is preferably at least 2.0 g/cm³. It is more preferably at least 2.2 g/cm³, further preferably at least 2.3 g/cm³, still more preferably at least 2.4 g/cm³.

Further, the optical glass of the present invention has a temperature T₂ at which the viscosity of the glass is logη=2 of from 750 to 1,200°C. log is common logarithm (log₁₀), and η is the viscosity when the shear stress is 0. T₂ is the standard temperature for melting property, and if T₂ of the glass is too high, it is necessary to melt the glass at high temperature, and accordingly in the case of a high refractive index glass, the visible light transmittance particularly in short wavelength may decrease. T₂ is preferably at most 1,180°C, more preferably at most 1,150°C, further preferably at most 1,130°C, still more preferably at most 1,110°C.

On the other hand, if T₂ is too low, the viscosity curve becomes steep, and it tends to be difficult to control the viscosity at the time of production. The optical glass of the present invention, which has T₂ within the above range, has favorable production properties. T₂ is preferably at least 800°C, more preferably at least 820°C, further preferably at least 840°C, still more preferably at least 860°C, particularly preferably at least 900°C.

Further, the optical glass of the present invention has devitrification temperature of at most 1,300°C. Having such a property, devitrification of glass at the time of formation can be suppressed, and the forming property is good. The devitrification temperature is more preferably at most 1,275°C, further preferably at most 1,250°C, still more preferably at most 1,225°C, still more preferably at most 1,200°C, still more preferably at most 1,175°C, still more preferably at most 1,150°C, still more preferably at most 1,125°C, still more preferably at most 1,100°C, still more preferably at most 1,075°C, particularly preferably at most 1,050°C. The devitrification temperature is the lowest temperature at which no crystal of 1 µm or larger by the long side or the major axis is confirmed on the surface and in the interior of the glass, when heated and molten glass is air-cooled.

Further, the optical glass of the present invention has a viscosity at the devitrification temperature (devitrification viscosity) of preferably logη≧0.5. Having such a property, devitrification of the glass at the time of forming can be suppressed, and the forming property is good. The devitrification viscosity is more preferably logη≧0.7, further preferably logη≧0.9, still more preferably logη≧1.1, still more preferably logη≧1.3, particularly preferably logη≧1.5. The upper limit of the devitrification viscosity is not particularly limited, and is usually preferably logη≦6.

Further, wearable devices are required such that a decrease of the transmittance to visible light through the optical glass is suppressed, however, the transmittance of the glass of the present invention may decrease on wavelength shorter than 400 nm by being melted at high temperature. Further, on-vehicle cameras and visual sensors for robot sometimes employ near ultraviolet images to recognize objects which can hardly be distinguished by visual light, and glass to be used for such an optical system is required to have a high transmittance in the near ultraviolet region. Accordingly, the optical glass of the present invention has a light transmittance (T₃₆₀) at wavelength of 360 nm of preferably at least 20%, when formed into a glass plate having thickness of 1 mm. When the optical glass of the present invention has such a property, it is suitable as glass to be used for wearable devices and on-vehicle cameras. Particularly in a light guide which displays an image or a video image, among wearable devices, the light loss in short wavelength is large since the optical path length is long.

In the present invention, since the transmittance in short wavelength is so high as at least 20%, the above light loss in short wavelength is suppressed, whereby desired colors can readily be reproduced without decreasing the transmittance in the entire visible region. Further, brightness of a video image or an image will not be lowered. T₃₆₀ is more preferably at least 30%, further preferably at least 40%, still more preferably at least 50%, still more preferably at least 60%, particularly preferably at least 70%.

T₃₆₀ may be measured, for example, by a spectrophotometer with respect to a glass plate having thickness of 1 mm and having both surfaces mirror-polished.

Further, the optical glass of the present invention has Young's Modulus (E) of preferably at least 60 GPa. Having such a property, when the optical glass of the present invention is used for wearable devices as a thin glass plate or when used for on-vehicle cameras, visual sensors for robot, etc. as a lens, warpage tends to be small. Particularly when used for a light guide, ghost images and distortion of an image or a video image can be prevented when attached to glasses frames or a display device. E is more preferably at least 70 GPa, further preferably at least 80 GPa, still more preferably at least 85 GPa, particularly preferably at least 90 GPa.

In the optical glass of the present invention, the water resistance (RW) grade is preferably 4 or higher, as measured in accordance with Measuring Method for Chemical Durability of Optical Glass (Powder Method), Japan Optical Glass Industrial Standards JOGIS06-2008. RW is measured, specifically, as follows. With respect to a glass powder having particle size of from 420 to 600 µm, the mass reduction rate (%) when the glass powder is immersed in 80 mL of pure water at 100°C for one hour is measured. The optical glass is rated a predetermined grade in accordance with the mass reduction rate. A grade with a smaller number indicates better RW. When the RW grade of the glass is 4 or higher, low surface roughness Ra by precision polishing can easily be obtained. The RW grade is more preferably 3 or higher. For an application for which particularly low Ra is required, the RW grade is preferably 2 or higher, particularly preferably 1.

Further, in the optical glass of the present invention, the acid resistance (RA) grade is preferably 4, as measured in accordance with Measuring Method for Chemical Durability of Optical Glass (Powder Method), JOGIS06-2008. RA is measured, specifically, as follows. With respect to a glass powder having particle size of from 420 to 600 µm, the mass reduction rate (%) when the glass powder is immersed in 80 mL of a 0.01 N nitric acid aqueous solution at 100°C for one hour is measured. The optical glass is rated a predetermined grade in accordance with the mass reduction rate. A grade with a smaller number indicates better RA. When the RA grade of the glass is 4 or higher, low surface roughness Ra by precision polishing can easily be obtained. The RA grade is more preferably 3 or higher. For an application for which particularly low Ra is required, the RA grade is preferably 2 or higher, particularly preferably 1.

Further, the optical glass of the present invention preferably has glass transition temperature (Tg) of from 500 to 700°C. The optical glass of the present invention, which has Tg within the above range, can favorably be formed by press molding or redraw process. Tg is more preferably from 520°C to 680°C, further preferably from 540°C to 660°C, still more preferably from 560°C to 640°C, particularly preferably from 570°C to 620°C. Tg is measured, for example, by thermal expansion method.

Further, the optical glass of the present invention preferably has Abbe number (v_{d}) of at most 60. Specifically, in a case where the optical glass of the present invention is applied to a glass plate such as a light guide plate, by the optical glass having low v_{d} within the above range, optical design of the wearable devices will be easy, and chromatic aberration will readily be improved, whereby beautiful image or video image can be reproduced. v_{d} is more preferably at most 50, further preferably at most 40, still more preferably at most 35, particularly preferably at most 30. The lower limit of the Abbe number is not particularly limited, and is approximately at least 10, specifically at least 15, more specifically at least 20 in many cases.

Further, the optical glass according to the present embodiment has coefficient of thermal expansion (α) at from 50 to 350°C of preferably from 50 to 150 (×10⁻⁷/K). When the optical glass according to the present embodiment has α within the above range, its expansion well matches peripheral members. As the lower limit of α, α is preferably at least 60 (×10⁻⁷/K), more preferably at least 70 (×10⁻⁷/K), further preferably at least 80 (×10⁻⁷/K), particularly preferably at least 90 (×10⁻⁷/K). The upper limit of α is not particularly limited, and is usually preferably at most 150.

Further, the optical glass according to the present embodiment, which has α within the above range, is hardly broken at cooling, whereby the cooling rate can be increased. As a result, the difference between the fictive temperature (Tf) and the glass transition temperature (Tg) (Tf-Tg) of the optical glass can be made to be at least 0°C, the structure of the glass can be made sparser, and even when a certain impact is applied to the optical glass, the structure of the glass is densified, whereby the impact is likely to be absorbed. As a result, the strength of the optical glass itself improves, and damages due to e.g. dropping can be suppressed. As the upper limit of α, α is at most 120 (×10⁻⁷/K), more preferably at most 110 (×10⁻⁷/K), further preferably at most 100 (×10⁻⁷/K), particularly preferably at most 95 (×10⁻⁷/K).

The optical glass of the present invention is preferably in the form of a glass plate having thickness of from 0.01 to 2.0 mm. When the thickness is at least 0.01 mm, it is possible to prevent the optical glass from being damaged when handled or processed. Further, warpage of the optical glass by its own weight can be suppressed. The thickness is more preferably at least 0.1 mm, further preferably at least 0.3 mm, still more preferably at least 0.5 mm. On the other hand, when the thickness is at most 2.0 mm, an optical device using the optical glass can be made light in weight. The thickness is more preferably at most 1.5 mm, further preferably at most 1.0 mm, still more preferably at most 0.8 mm.

In a case where the optical glass of the present invention is a glass plate, the area of one principal plane is preferably at least 8 cm². When the area is at least 8 cm², large number of optical devices can be disposed, thus improving the productivity. The area is more preferably at least 30 cm², further preferably at least 170 cm², still more preferably at least 300 cm², particularly preferably at least 1,000 cm². On the other hand, when the area is at most 6,500 cm², the glass plate can easily be handled, and it is possible to prevent the glass plate from being damaged when handled or processed. The area is more preferably at most 4,500 cm², further preferably at most 4,000 cm², still more preferably at most 3,000 cm², particularly preferably at most 2,000 cm².

In a case where the optical glass of the present invention is a glass plate of which both facing principal planes are polished, LTV (Local Thickness Variation) in 25 cm² of one principal plane is preferably at most 2 µm. By the optical glass having flatness within such a range, a nanostructure having a desired shape can be formed on one principal plane e.g. by imprinting, and desired light guide properties can be obtained. Particularly, in the case of a light guide, ghost images and distortion due to difference in the optical path length can be prevented. LTV is more preferably at most 1.8 µm, further preferably at most 1.6 µm, still more preferably at most 1.4 µm, particularly preferably at most 1.2 µm.

LTV of the glass substrate can be measured as follows. The plate thickness of the glass substrate is measured at 3 mm intervals with respect to a plate-shape sample of 50 mm × 50 mm × 1 mm in thickness by a non-contact laser displacement gauge (for example, NANOMETRO manufactured by KURODA PRECISION INDUSTRIES LTD.) to calculate LTV.

When the optical glass of the present invention is formed into a circular glass plate having a diameter of 20.32 cm (8 inches), the warpage is preferably at most 50 µm. When the warpage is at most 50 µm, a nanostructure having desired shape can be formed on one principal plane e.g. by imprinting, and desired light guide properties can be obtained. When a plurality of light guides are to be obtained, products with stable quality can be obtained. The warpage is more preferably at most 40 µm, further preferably at most 30 µm, particularly preferably at most 20 µm.

Further, when the optical glass of the present invention is formed into a circular glass plate having a diameter of 15.24 cm (6 inches), the warpage is preferably at most 30 µm. When the warpage is at most 30 µm, a nanostructure having a desired shape can be formed on one principal plane e.g. by imprinting, and desired light guide properties can be obtained. When a plurality of light guides are to be obtained, products with stable quality can be obtained. The warpage is more preferably at most 20 µm, further preferably at most 15 µm, particularly preferably at most 10 µm.

Fig. 1 is a cross sectional view schematically illustrating a glass plate when the optical glass of the present invention is formed into a glass plate G1. The "warpage" is, in an optional cross section which passes the center of one principal plane G1F of the glass plate G1 and which is orthogonal to the one principal plane G1F of the glass plate G1, the difference C between the maximum distance B and the minimum distance A in the vertical direction between the base line G1D of the glass plate G1 and the center line G1C of the glass plate G1.

The nodal line of the optional orthogonal cross section and the one principal plane G1F of the glass plate G1 is taken as the bottom line G1A. The nodal line of the optional orthogonal cross section and the other principal plane G1G of the glass plate G1 is taken as the upper line G1B. The center line G1C is a line formed by connecting centers in the plate thickness direction of the glass plate G1. The center line G1C is calculated from midpoints between the bottom line G1A and the upper line G1B in the after-described laser irradiation direction.

The base line G1D is obtained as follows. First, the bottom line G1A is calculated by a measurement method which cancels the influence by the glass plate's own weight. A straight line is obtained from the bottom line G1A by least-squares method. The obtained straight line is the standard line G1D. As the measurement method to cancel the influence by the glass plate's own weight, a known method may be employed.

For example, the glass plate G1 is supported at three points on the one principal plane G1F, the glass plate G1 is irradiated with laser by a laser displacement gauge, and the heights of the one principal plane G1F and the other principal plane G1G of the glass plate G1 from an optional reference plane are measured.

Then, the glass plate G1 is turned upside down, and is supported at three points on the other principal plane G1G facing the three points which have supported the one principal plane G1F, and the heights of the one principal plane G1F and the other principal plane G1G of the glass substrate G1 from an optional reference plane are measured.

The averages of the heights at the respective measurement points before and after turning are obtained, whereby the influence by the glass plate's own weight is cancelled. For example, before turning, as described above, the height of the one principal plane G1F is measured. After the glass plate G1 is turned upside down, the height of the other principal plane G1G is measured at a position corresponding to the measurement point on the one principal plane G1F. Similarly, before turning, the height of the other principal plane G1G is measured. After the glass plate G1 is turned upside down, the height of the one principal plane G1F is measured at a position corresponding to the measurement point on the other principal plane G1G.

The warpage may be measured, for example, by a laser displacement gauge.

Further, in the optical glass of the present invention, the surface roughness Ra on one principal plane is preferably at most 2 nm. By the optical glass having Ra within such a range, a nanostructure having a desired shape can be formed on one principal plane e.g. by imprinting, and desired light guide properties can be obtained. Particularly in the case of a light guide, diffuse reflection at an interface is suppressed, whereby ghost images and distortion can be prevented. Ra is more preferably at most 1.7 nm, further preferably at most 1.4 nm, still more preferably at most 1.2 nm, particularly preferably at most 1 nm. Ra is the arithmetic mean roughness defined by JIS B0601 (2001). In this specification, it is a value measured with respect to a 10 µm square by an atomic force microscope (AFM).

### [Glass component]

Now, composition ranges of the respective components which the optical glass of the present invention may contain, according to an embodiment, will be described in detail. In this specification, the contents of the respective components are represented by mol% based on oxides, unless otherwise specified. Further, "containing substantially no" means that the substance is not contained excluding inevitable impurities. The content of inevitable impurities in the present invention is at most 0.1%.

The composition (content) which satisfies the above properties of the optical glass according to the present invention is, as represented by mol% based on oxides, Nb₂O₅: 3% to 35%, at least one member selected from the group consisting of BaO, TiO₂, ZrO₂, WOs and Ln₂O₃ (wherein Ln is at least one member selected from the group consisting of Y, La, Gd, Yb and Lu): 0% to 30%, SiO₂: 46% to 65%, and TiO₂: 0% to 21.5%.

The respective components in this glass composition will be specifically described.

SiO₂ is a glass forming component, and is a component which imparts high strength and crack resistance to glass, and improves the stability and chemical durability of the glass. The content of SiO₂ is at least 46% and at most 65%. When the content of SiO₂ is at least 29%, the temperature T₂ at which the viscosity of the glass is logη=2 can be within a preferred range. In the case of the present invention, where the temperature T₂ is of further importance, it is at least 46%, preferably at least 50%, more preferably at least 54%. On the other hand, when the SiO₂ content is at most 65%, a component to obtain high refractive index can be incorporated. The SiO₂ content is preferably at most 60%, more preferably at most 55%, further preferably at most 50%, further preferably at most 45%. In a case not according to the present invention, where high refractive index is of further importance, it is preferably at most 40%, more preferably at most 35%, further preferably at most 30%.

Nb₂O₅ is a component which increases the refractive index of the glass and lowers the Abbe number (v_{d}). The Nb₂O₅ content is at least 3% and at most 35%. The Nb₂O₅ content is preferably at least 10%, more preferably at least 15%, further preferably at least 20%, further preferably at least 24%, further preferably at least 27%, particularly preferably at least 30%.

Further, if the amount of Nb₂O₅ is too large, devitrification is likely to occur. Accordingly, for an application for which a lower surface roughness Ra (at most 1.5 nm) is required, the Nb₂O₅ content is preferably at most 33%, more preferably at most 30%, further preferably at most 27%.

BaO, TiO₂, ZrO₂, WOs and Ln₂O₃ (wherein Ln is at least one member selected from the group consisting of Y, La, Gd, Yb and Lu) are components to increase the refractive index of the glass. The total content of such components is at least 0% and at most 30%.

If the Nb₂O₅ content is at most 10%, in order to increase the refractive index of the glass, in addition to Nb₂O₅, as other high refractive index component, at least one member selected from the group consisting of BaO, TiO₂, ZrO₂, WOs and Ln₂O₃ (wherein Ln is at least one member selected from the group consisting of Y, La, Gd, Yb and Lu) is preferably contained in an amount of at least 1%. The content of such a component is more preferably at least 3%, further preferably at least 5%, particularly preferably at least 7%. On the other hand, if the content of such other high refractive index component is higher than 30%, devitrification is likely to occur. The content of such a component is more preferably at most 25%, further preferably at most 20%, particularly preferably at most 15%.

In the optical glass according to a further embodiment, an alkali metal component (Li₂O, Na₂O, K₂O) is incorporated, and by increasing the alkali metal component, Tg can be lowered. However, if the alkali metal component is too large, T₂ tends to be low, the viscosity curve will be steep, and the production properties will be deteriorated. On the other hand, if the alkali metal component is too small, T₂ tends to be high, the melting temperature tends to be high, and the glass may be colored. Accordingly, Li₂O+Na₂O+K₂O is at least 6% and at most 40%. Li₂O+Na₂O+K₂O is preferably at least 14%, more preferably at least 18%, further preferably at least 20%, particularly preferably at least 24%. Further, Li₂O+Na₂O+K₂O is preferably at most 36%, more preferably at most 32%, further preferably at most 28%, particularly preferably at most 24%. "Li₂O+Na₂O+K₂O" means the total content of at least one alkali metal oxide component selected from the group consisting of Li₂O, Na₂O and K₂O.

In the optical glass according to the embodiment, among the alkali metal components (Li₂O, Na₂O, K₂O), Li₂O is a component which improves the strength of the glass, however, if its amount is large, T₂ tends to be low, and devitrification is likely to occur. Accordingly, in the optical glass according to the embodiment, the Li₂O/(Li₂O+Na₂O+K₂O) ratio represented by mol% based on oxides is at least 0.10 and at most 0.65. If this ratio is higher than 0.65, T₂ tends to be low, devitrification is likely to occur, and the glass forming property will deteriorate. The ratio is more preferably at most 0.60, further preferably at most 0.55, further preferably at most 0.50, particularly preferably at most 0.45. On the other hand, if the ratio is higher than 0.10, the glass strength will be sufficiently high. The ratio is preferably at least 0.20, more preferably at least 0.30, further preferably at least 0.40.

Li₂O is an optional component, and is a component which improves the strength of the glass, and which lowers T₂, lowers Tg and improves the glass melting property. The content of Li₂O is at least 0.6% and at most 26%. When Li₂O is contained, the strength (Kc) and the crack resistance (CIL) will improve. On the other hand, if the amount of Li₂O is too large, devitrification is likely to occur. When the optical glass of the present invention contains Li₂O, its content is preferably at least 1%, more preferably at least 3%, further preferably at least 5%, particularly preferably at least 7%. Further, the Li₂O content is preferably at most 22%, more preferably at most 19%, further preferably at most 16%, particularly preferably at most 13%.

In a case where the optical glass according to the embodiment is chemically tempered, the Li₂O content is preferably at least 3.0%, more preferably at least 6.0%, further preferably at least 9.0%, particularly preferably at least 11.0%.

Na₂O is an optional component, and is a component which suppresses devitrification and lowers Tg. The content of Na₂O is at least 0% and at most 20%. When Na₂O is contained, an excellent devitrification-suppressing effect will be obtained. On the other hand, if the amount of Na₂O is too large, strength and crack resistance are likely to decrease. When the optical glass of the present invention contains Na₂O, the content is preferably at least 1%, more preferably at least 3%, further preferably at least 6%, particularly preferably at least 8%. Further, the content of Na₂O is preferably at most 18%, more preferably at most 16%, further preferably at most 14%.

In a case where the optical glass according to the embodiment is chemically tempered, the Na₂O content is preferably at least 2.0%, more preferably at least 4.0%, further preferably at least 6.0%, particularly preferably at least 8.0%.

K₂O is an optional component, and is a component which improves the glass melting property and is a component which suppresses devitrification. The K₂O content is at least 0% and at most 10%. When K₂O is contained, a devitrification-suppressing effect will improve. On the other hand, if the amount of K₂O is too large, the density is likely to increase. The K₂O content is preferably at least 0.3%, more preferably at least 0.5%, further preferably at least 1%. Further, the K₂O content is preferably at most 10%, more preferably at most 8%, further preferably at most 6%.

B₂O₃ is an optional component. B₂O₃ is a component which lowers Tg, and improves mechanical properties such as strength and crack resistance of the glass. If the amount of B₂O₃ is large, the refractive index tends to decrease. Accordingly, the B₂O₃ content is preferably at least 0% and at most 15%. The B₂O₃ content is more preferably at most 10%, further preferably at most 6%, particularly preferably at most 3%. Further, the B₂O₃ content is more preferably at least 0.3%, further preferably at least 1%, particularly preferably at least 2%.

MgO is an optional component. MgO is a component which improves glass melting property, suppresses devitrification and adjusts optical constants such as the Abbe number and the refractive index of the glass. On the other hand, if the amount of MgO is large, devitrification will rather be accelerated. Accordingly, the MgO content is preferably at least 0% and at most 10%. The MgO content is more preferably at most 8%, particularly preferably at most 6%. Further, the MgO content is preferably at least 0.3%, more preferably at least 0.5%, further preferably at least 1%.

CaO is an optional component. CaO is a component which suppresses devitrification, however, if the amount of CaO is large, crack resistance tends to decrease. Accordingly, the CaO content is preferably at least 0% and at most 25%. The CaO content is more preferably at most 20%, further preferably at most 10%, particularly preferably at most 6%. Further, the CaO content is more preferably at least 0.3%, further preferably at least 0.5%, particularly preferably at least 1%.

SrO is an optional component. SrO is a component which improves glass melting property, suppresses devitrification and adjusts the optical constants of the glass. On the other hand, if the amount of SrO is large, devitrification will further be accelerated. Accordingly, the SrO content is preferably at least 0% and at most 20%. The SrO content is more preferably at most 15%, further preferably at most 8%, particularly preferably at most 4%. Further, the SrO content is more preferably at least 0.3%, further preferably at least 0.5%, particularly preferably at least 1%.

BaO is an optional component. BaO is a component which suppresses devitrification, however, if the amount of BaO is large, the density tends to be high. Accordingly, the BaO content is, if contained, preferably at least 0% and at most 30%. The BaO content is more preferably at most 25%, further preferably at most 15%, further preferably at most 8%, particularly preferably at most 4%. Further, the BaO content is more preferably at least 0.3%, further preferably at least 0.5%, particularly preferably at least 1%.

Al₂O₃ is an optional component. Al₂O₃ is a component which improves chemical durability, however, if the amount of Al₂O₃ is large, the glass is likely to undergo devitrification. Accordingly, the Al₂O₃ content is preferably at least 0% and at most 5%. The Al₂O₃ content is more preferably at most 3%, particularly preferably at most 2%. Further, the Al₂O₃ content is more preferably at least 0.3%, further preferably at least 0.5%, particularly preferably at least 1%.

TiO₂ is an optional component, and is a component which increases the refractive index of the glass and increases dispersion of the glass. Further, by incorporating TiO₂, the refractive index can be improved. On the other hand, if the amount of TiO₂ is too large, the glass tends to be colored, and the transmittance tends to decrease. Accordingly, the TiO₂ content is preferably at least 0% and at most 21.5%. The TiO₂ content is, if contained, more preferably at least 0.5%, further preferably at least 1%, particularly preferably at least 1.5%. Further, the TiO₂ content is more preferably at most 20%, further preferably at most 18%, further preferably at most 16%, further preferably at most 14%, further preferably at most 12%, further preferably at most 10%, particularly preferably at most 8%.

WOs is an optional component. By addition of WOs, devitrification of the glass is suppressed, however, if the amount of WOs is too large, the glass will rather be devitrified. Accordingly, the WOs content is preferably at least 0% and at most 15%. The WOs content is more preferably at most 12%, further preferably at most 9%, particularly preferably at most 5%. Further, the WOs content is more preferably at least 0.3%, further preferably at least 0.5%, particularly preferably at least 1%.

ZrO₂ is an optional component, and is a component which increases the refractive index of the glass and increases chemical durability of the glass. By incorporating ZrO₂, crack resistance can be improved. On the other hand, if the amount of ZrO₂ is too large, devitrification is likely to occur. Accordingly, the ZrO₂ content is preferably at least 0% and at most 15%. The ZrO₂ content is, if contained, more preferably at least 0.5%, further preferably at least 1.5%, further preferably at least 2.4%, particularly preferably at least 3.0%. The ZrO₂ content is more preferably at most 15%, further preferably at most 12%, particularly preferably at most 10%.

ZnO is an optional component, and is a component which improves mechanical properties such as strength and crack resistance of the glass. On the other hand, if the amount of ZnO is large, devitrification is likely to occur, and its content is preferably at least 0% and at most 15%. The ZnO content is more preferably at most 13%, further preferably at most 12%, particularly preferably at most 10%. Further, the ZnO content is more preferably at least 0.3%, further preferably at least 0.5%, particularly preferably at least 1%.

La₂O₃ is an optional component. La₂O₃ is a component which improves the refractive index of the glass, however, if the amount of La₂O₃ is too large, mechanical properties will decrease. Accordingly, the La₂O₃ content is preferably at least 0% and at most 20%. The La₂O₃ content is more preferably at most 16%, further preferably at most 12%, further preferably at most 10%, further preferably at most 8%, further preferably at most 6%, particularly preferably at most 4%. Further, the La₂O₃ content is more preferably at least 0.5%, preferably at least 3%.

As₂O₃ is a harmful chemical substance and thereby tends not to be used in recent years, and environmental countermeasures are required. Accordingly, in a case where environmental influences are of importance, substantially no As₂O₃ is preferably contained except for inevitable inclusion.

The optical glass according to a further embodiment preferably contains at least one of Sb₂O₃ and SnO₂. They are not essential components, but may be added for the purpose of adjusting refractive index properties, improving melting properties, suppressing coloring, improving the transmittance, improving refining property and chemical durability, etc. In a case where such a component is contained, their total content is preferably at most 10%, more preferably at most 5%, further preferably at most 3%, particularly preferably at most 1%.

In the optical glass according to a further embodiment, F is preferably contained. F is not essential, but may be added for the purpose of improving the melting property, improving the transmittance, improving refining property, etc. The F content is, if contained, preferably at most 5%, more preferably at most 3%.

The optical glass according to a further embodiment, which contains an alkali metal oxide such as Li₂O or Na₂O, can be chemically tempered by replacing Li ions with Na ions or K ions and Na ions with K ions. That is, by chemical tempering treatment, strength of the optical glass can be improved.

### [Method for producing optical glass and glass formed product]

The optical glass of the present invention is produced, for example, as follows. That is, first, materials are weighed so as to achieve the above predetermined glass composition and uniformly mixed. The prepared mixture is poured into a platinum crucible, a quartz crucible or an alumina crucible and roughly melted. Then, the melt is put in a gold crucible, a platinum crucible, a platinum alloy crucible, a reinforced platinum crucible or an iridium crucible and melted within a temperature range of from 1,200 to 1,400°C for from 2 to 10 hours, homogenized by fining, stirring or the like to remove bubbles, and cast into a mold and annealed, whereby the optical glass of the present invention is obtained.

Further, the optical glass may be formed into a glass plate by forming molten glass into a plate by float process, fusion process, roll out process or the like. Further, the molten glass may be once formed into a block and then formed into a glass plate e.g. by redraw process. Further, a glass formed product may be prepared for example by reheat press molding or precision press molding. That is, a lens preform for press molding may be prepared from the optical glass, and the lens preform is subjected to reheat press molding and then polished to prepare a glass formed product, or for example, a lens preform prepared by polishing may be subjected to precision press molding to prepare a glass formed product. The means to prepare a glass formed product is not limited thereto.

In the optical glass of the present invention produced as mentioned above, the number of remaining bubbles is preferably at most 10 per kg (10 bubbles/kg), more preferably at most 7 bubbles/kg, further preferably at most 5 bubbles/kg, particularly preferably at most 3 bubbles/kg. In a case where a glass plate is formed by the above method, when the number of the remaining bubbles is at most 10 bubbles/kg, a glass plate containing no bubble can be efficiently formed. Further, taking the diameter of a minimum circle in the interior of which each remaining bubble is contained, as the size of each remaining bubble, the size of each remaining bubble is preferably at most 80 µm, more preferably at most 60 µm, further preferably at most 40 µm, particularly preferably at most 20 µm.

The aspect ratio of the shape of the remaining bubble, L₂/L₁, wherein L₁ is the length of the remaining bubble in the lengthwise direction, which is the above diameter, and L₂ is the length of the remaining bubble in the crosswise direction, which is the length of a straight line having the maximum length of the remaining bubble, among straight lines crossing at right angles with the diameter, is preferably at least 0.90, more preferably at least 0.92, further preferably at least 0.95. When L₂/L₁ is at least 0.90, the remaining bubble is close to a true circle (true sphere), and even if a remaining bubble is contained, a decrease of the glass strength can be suppressed as compared with a case of an elliptic remaining bubble, and when a glass plate is prepared, breakage resulting from the remaining bubble can be suppressed. Further, even if a remaining bubble is present in the glass substrate, anisotropic scattering of light entering the glass plate can be suppressed as compared with an elliptic remaining bubble. The size and the shape of the remaining bubbles are obtained from values measured by a laser microscope (manufactured by KEYENCE CORPORATION, VK-X100).

The optical member such as the glass plate or the glass formed product thus prepared is useful for various optical devices. Particularly, it is suitably used for (1) a light guide, a filter, a lens or the like to be used for wearable devices, for example, glasses with a projector, glasses/goggles with display, a VR/AR display or a virtual image display device, or (2) a lens, a cover glass, etc. to be used for on-vehicle cameras or visual sensors for robot. The optical member is preferred also for an application to be exposed to a severe environment, such as on-vehicle cameras. Further, the optical member is suitable also for an application such as a glass substrate for organic EL, a substrate for wafer level lens array, a substrate for lens unit, a lens-forming substrate by etching, or an optical waveguide.

### EXAMPLES

Raw materials were weighed so as to achieve the chemical compositions (represented by mass% as calculated as oxides) as identified in Tables 1 to 5. As the raw materials, high purity materials to be used for conventional optical glass, such as an oxide, a hydroxide, a carbonate, a nitrate, a fluoride, a hydroxide and a metaphosphoric acid compound, corresponding to raw materials of the respective components, were selected. In Tables, "R₂O" represents the total content of Li₂O, Na₂O and K₂O, and "other high refractive index component" means the total content of BaO, TiO₂, ZrO₂, WO₃ and Ln₂O₃.

The weighed materials were uniformly mixed and put in a platinum crucible having a capacity of about 300 mL, melted at about 1,200°C for about 2 hours, refined and stirred, and kept at 1,200°C for 0.5 hour, and then cast into a mold in a plate shape of 50 mm × 100 mm × 20 mm in depth preheated to about 650°C. Then, the mixture was annealed at about 1°C/min to obtain samples in Ex. 1 to 40 and 42 to 44. The glass in Ex. 41 had a T₂ at which the viscosity η was logη=2 was so high as 1,200°C or higher, and the melting temperature was 1,400°C so as to sufficiently refine and homogenize the glass. Ex. 1 to 6, 8 to 33, and 35 are Examples of the present invention, Ex. 7, 34, and 36 to 39 are Reference Examples, and Ex. 40 to 44 are Comparative Examples.

### [Evaluation]

With respect to the above obtained samples, the refractive index (n_{d}), the density (d), the devitrification temperature, the viscosity (the temperature T₂ at which the viscosity η is logη=2), the devitrification viscosity, the light transmittance (T₃₆₀) at wavelength of 360 nm when formed into a glass plate having thickness of 1 mm, the glass transition point (Tg), the Young's modulus (E), the Abbe number and the coefficient of thermal expansion (α) were measured as follows. The obtained results are shown in Tables 1 to 5.

Refractive index (n_{d}), the glass sample was processed into a triangular prism, one side of which was 30 mm and which had thickness of 10 mm, and the refractive index was measured by a refractometer (manufactured by Kalnew, equipment name: KPR-2000).

### Density (d): measured in accordance with JIS Z8807 (1976, measurement method weighed in liquid)

Devitrification temperature: about 5 g of the sample was put in a platinum dish and kept at from 1,000°C to 1,400°C every 5°C each for one hour and air-cooled, and whether or not crystals were precipitated was observed by a microscope, and the minimum temperature at which no crystals of 1 µm or larger by the long side or the major axis were confirmed, was taken as the devitrification temperature.

Temperature T₂: the viscosity when the sample was heated was measured by a rotary viscometer, and the temperature T₂ at which the viscosity η was logη=2 (standard temperature for melting property) was measured.

Devitrification viscosity: the viscosity of the glass at the devitrification temperature was measured by a rotary viscometer.

Light transmittance (T₃₆₀): with respect to a sample processed into a plate shape of 10 mm × 30 mm × 1 mm in thickness, having both surfaces mirror-polished, the light transmittance at wavelength of 360 nm was measured by a spectrophotometer (manufactured by Hitachi High-Tech Corporation, U-4100).

Glass transition point (Tg): a value measured by a differential dilatometer (TMA), obtained in accordance with JIS R3103-3 (2001).

Young's modulus (E): measured with respect to a sample in a plate shape of 20 mm × 20 mm × 1 mm in thickness, by an ultrasonic precision plate thickness meter (manufactured by Olympus Corporation, MODEL 38DL PLUS) (unit: GPa).

Water resistance (RW): measured in accordance with Measuring Method for Chemical Durability of Optical Glass (Powder Method), JOGIS06-2008. Specifically, with respect to a glass powder having particle size of from 420 to 600 µm, the mass reduction rate (%) when the glass powder was immersed in 80 mL of pure water at 100°C for one hour was measured. The grade 1: mass reduction rate of less than 0.05%, grade 2: at least 0.05% and less than 0.10%, grade 3: at least 0.10% and less than 0.25%, grade 4: at least 0.25% and less than 0.60%, grade 5: at least 0.60% and less than 1.10%, grade 6: at least 1.10%.

Acid resistance (RA): measured in accordance with Measuring Method for Chemical Durability of Optical Glass (Powder Method), JOGIS06-2008. Specifically, with respect to a glass powder having particle size of from 420 to 600 µm, the mass reduction rate (%) when the glass powder was immersed in 80 mL of a 0.01 N nitric acid aqueous solution at 100°C for one hour was measured. Grade 1: mass reduction rate of less than 0.20%, grade 2: at least 0.20% and less than 0.35%, grade 3: at least 0.35% and less than 0.65%, grade 4: at least 0.65% and less than 1.20%, grade 5: at least 1.20% and less than 2.20%, grade 6: at least 2.20%.

LTV: the plate thickness of the glass substrate was measured with respect to a sample in a plate shape of 50 mm × 50 mm × 1 mm in thickness at 3 mm intervals by a non-contact laser displacement gauge (manufactured by KURODA PRECISION INDUSTRIES LTD., NANOMETRO), and LTV was calculated.

Warpage: the heights of the two principal planes of the glass substrate was measured with respect to disk samples of 20.32 cm (8 inches) in diameter × 1 mm and 15.24 cm (6 inches) in diameter × 1 mm at 3 mm intervals by a non-contact meter displacement gauge (manufactured by KURODA PRECISION INDUSTRIES LTD., NANOMETRO), and warpage was calculated by the above method described with reference to Fig. 1.

Surface roughness (Ra): a value measured with respect to a sample in a plate shape of 20 mm × 20 mm × 1 mm in thickness in an area of 10 µm × 10 µm by an atomic force microscope (AFM) (manufactured by OXFORD INSTRUMENTS).

Abbe number (v_{d}): calculated with respect to the sample used for the refractive index measurement, in accordance with vd=(n_{d}-1)/(n_{F}-n_{C}). n_{d}, n_{F} and nc are refractive indices to helium d line, hydrogen F line and hydrogen C line, respectively. These refractive indices were also measured using the above refractometer.

Coefficient of thermal expansion (α): the coefficient of linear thermal expansion within a range of from 30 to 350°C was measured by a differential dilatometer (TMA), and the average coefficient of linear thermal expansion within a range of from 30 to 350°C was measured in accordance with JIS R3102 (1995).

**[Table 1]**

| mol% | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|
| SiO₂ | 56.3 | 56.3 | 55.5 | 56.3 | 46.8 | 49.5 | 44.5 | 54.5 | 56.3 | 52.5 |
| B₂O₃ | | 0.5 | 0.5 | 0.5 | 10.0 | 0.5 | 0.5 | 0.5 | 0.5 | 2.5 |
| MgO | | | | | | | | | | |
| CaO | | | | | | | | | | |
| SrO | | | | | | | | | | |
| BaO | | | | | | | | | | |
| Li₂O | 10.5 | 11.0 | 8.5 | 10.2 | 10.2 | 10.2 | 12.5 | 10.2 | 9.4 | 10.2 |
| Na₂O | 6.9 | 6.2 | 7.8 | 7.1 | 7.1 | 7.1 | 8.7 | 7.1 | 6.5 | 7.1 |
| K₂O | 4.6 | 4.0 | 5.5 | 4.7 | 4.7 | 4.7 | 5.7 | 4.7 | 4.3 | 4.7 |
| Al₂O₃ | | | | | | | | | | |
| Y₂O₃ | | | | | | | | | | |
| TiO₂ | | | | | | | | | | |
| Nb₂O₅ | 18.7 | 19.0 | 19.2 | 9.1 | 9.1 | 9.1 | 9.1 | 20.0 | 20.0 | 20.0 |
| La₂O₃ | | | | 9.1 | 9.1 | | | | | |
| ZrO₂ | 3.0 | 3.0 | 3.0 | 3.1 | 3.1 | 3.1 | 3.1 | 3.1 | 3.1 | 3.1 |
| ZnO | | | | | | 15.9 | 15.9 | | | |
| Gd₂O₃ | | | | | | | | | | |
| Other high refractive index component | 3.0 | 3.0 | 3.0 | 12.2 | 12.2 | 3.1 | 3.1 | 3.1 | 3.1 | 3.1 |
| R₂O | 22.0 | 21.2 | 21.8 | 21.9 | 21.9 | 21.9 | 26.9 | 21.9 | 20.1 | 21.9 |
| Li₂O/R₂O | 0.48 | 0.52 | 0.39 | 0.47 | 0.47 | 0.47 | 0.47 | 0.47 | 0.47 | 0.47 |
| Refractive index (n_{d}) | 1.79 | 1.79 | 1.77 | 1.73 | 1.74 | 1.72 | 1.72 | 1.80 | 1.80 | 1.80 |
| Density (d) [g/cm³] | 3.3 | 3.4 | 3.4 | 3.6 | 3.5 | 3.4 | 3.4 | 3.4 | 3.4 | 3.4 |
| Devitrification temperature [°C] | | | | 1200 | 1200 | | | 1075 | 1085 | 1060 |
| Temperature T₂ [°C] | 1079 | 1077 | 1075 | 1076 | 966 | 1012 | 950 | 1059 | 1082 | 1036 |
| Devitrification viscosity | | | | 1.3 | 0.8 | | | 1.9 | 2.0 | 1.9 |
| Light transmittance (T₃₆₀) [%] | | | | | | | | | 55 | |
| Glass transition point (Tg) [°C] | 613 | 618 | 617 | 596 | 576 | 544 | 504 | 616 | 631 | 612 |
| Young's modulus (E) [GPa] | | | | | | | | | | |
| Abbe number (vd) | 27 | 27 | 28 | 39 | 32 | 50 | 41 | 26 | 35 | 26 |
| Coefficient of thermal expansion α (50-350°C) [1/K] | 81 | 78 | 81 | 103 | 103 | 86 | 98 | 80 | 76 | 80 |

**[Table 2]**

| mol% | Ex. 11 | Ex. 12 | Ex. 13 | Ex. 14 | Ex. 15 | Ex. 16 | Ex. 17 | Ex. 18 | Ex. 19 | Ex. 20 |
|---|---|---|---|---|---|---|---|---|---|---|
| SiO₂ | 52.5 | 54.0 | 54.0 | 53.0 | 52.3 | 52.5 | 56.3 | 56.3 | 56.3 | 58.4 |
| B₂O₃ | 0.5 | 0.5 | 0.5 | 0.5 | 0.5 | 0.5 | 0.5 | 0.5 | 0.5 | 0.5 |
| MgO | | | | | | | | | | |
| CaO | | | | | | | | | | |
| SrO | | | | | | | | | | |
| BaO | | | | | | | | | | |
| Li₂O | 11.1 | 10.2 | 11.3 | 9.4 | 11.1 | 10.8 | 10.2 | 10.2 | 9.8 | 9.5 |
| Na₂O | 7.7 | 7.1 | 7.8 | 6.5 | 7.7 | 8.3 | 7.1 | 7.1 | 6.9 | 6.6 |
| K₂O | 5.1 | 4.7 | 5.1 | 4.3 | 5.1 | 4.8 | 4.7 | 4.7 | 4.6 | 4.4 |
| Al₂O₃ | | | | | | | | | | |
| Y₂O₃ | | | | | | | | | | |
| TiO₂ | | | | | | | | | | |
| Nb₂O₅ | 20.0 | 14.0 | 14.0 | 14.0 | 19.9 | 20.0 | 18.1 | 18.2 | 18.7 | 17.8 |
| La₂O₃ | | 6.5 | 4.2 | 4.2 | | | | | | |
| ZrO₂ | 3.1 | 3.1 | 3.1 | 3.1 | 3.4 | 3.1 | 3.2 | 3.1 | 3.2 | 2.9 |
| ZnO | | | | 5.1 | | | | | | |
| Gd₂O₃ | | | | | | | | | | |
| Other high refractive index component | 3.1 | 9.6 | 7.3 | 7.3 | 3.4 | 3.1 | 3.2 | 3.1 | 3.2 | 2.9 |
| R₂O | 23.9 | 21.9 | 24.2 | 20.1 | 23.9 | 23.9 | 22.0 | 21.9 | 21.3 | 20.5 |
| Li₂O/P₂O | 0.47 | 0.47 | 0.47 | 0.47 | 0.46 | 0.45 | 0.46 | 0.47 | 0.46 | 0.47 |
| Refractive index (n_{d}) | 1.80 | 1.77 | 1.76 | 1.78 | 1.80 | 1.81 | 1.78 | 1.78 | 1.79 | 1.77 |
| Density (d) [g/cm³] | 3.4 | 3.6 | 3.4 | 3.6 | 3.4 | 3.4 | 3.3 | 3.3 | 3.4 | 3.3 |
| Devitrification temperature [°C] | 1050 | 1200 | 1200 | 1200 | 1050 | 1050 | | | | |
| Temperature T₂ [°C] | 1034 | 1050 | 1050 | 1044 | 1036 | 1042 | 1081 | 1081 | 1083 | 1104 |
| Devitrification viscosity | 1.9 | 1.2 | 1.2 | 1.2 | 1.9 | 2.0 | | | | |
| Light transmittance (T₃₆₀) [%] | 62 | | | | | 67 | | | | |
| Glass transition point (Tg) [°C] | 600 | 606 | 586 | 605 | 600 | 600 | 611 | 612 | 618 | 622 |
| Young's modulus (E) [GPa] | | | | | | | | | | |
| Abbe number (vd) | 26 | 33 | 32 | 31 | 27 | 26 | 32 | 32 | 27 | 28 |
| Coefficient of thermal expansion α (50-350°C) [1/K] | 85 | 96 | 97 | 87 | 85 | 85 | 81 | 81 | 79 | 77 |

**[Table 3]**

| mol% | Ex. 21 | Ex. 22 | Ex. 23 | Ex. 24 | Ex. 25 | Ex. 26 | Ex. 27 | Ex. 28 | Ex. 29 | Ex. 30 |
|---|---|---|---|---|---|---|---|---|---|---|
| SiO₂ | 57.4 | 46.5 | 49.9 | 56.2 | 55.3 | 56.3 | 56.5 | 56.3 | 55.3 | 56.3 |
| B₂O₃ | 0.5 | 0.5 | 0.5 | 0.5 | 1.5 | 0.5 | 0.5 | 0.5 | 0.5 | 0.5 |
| MgO | | | | | | | | | | |
| CaO | | | | | | | | | | |
| SrO | | | | | | | | | | |
| BaO | | | | | | | | | | |
| Li₂O | 9.8 | 11.8 | 10.2 | 9.8 | 9.8 | 9.3 | 10.3 | 9.6 | 10.3 | 10.6 |
| Na₂O | 6.7 | 8.1 | 7.1 | 6.9 | 6.9 | 6.9 | 6.7 | 6.9 | 7.2 | 6.7 |
| K₂O | 4.5 | 5.4 | 4.7 | 4.6 | 4.6 | 5.1 | 4.3 | 4.8 | 4.8 | 4.3 |
| Al₂O₃ | | | | | | | | | | |
| Y₂O₃ | | | | | | | | | | |
| TiO₂ | | | | | | | | | | |
| Nb₂O₅ | 18.2 | 24.5 | 24.5 | 18.4 | 18.7 | 18.7 | 18.5 | 18.5 | 18.7 | 18.6 |
| La₂O₃ | | | | | | | | | | |
| ZrO₂ | 2.9 | 3.2 | 3.2 | 3.6 | 3.2 | 3.2 | 3.2 | 3.4 | 3.2 | 3.0 |
| ZnO | | | | | | | | | | |
| Gd₂O₃ | | | | | | | | | | |
| Other high refractive index component | 2.9 | 3.2 | 3.2 | 3.6 | 3.2 | 3.2 | 3.2 | 3.4 | 3.2 | 3.0 |
| R₂O | 21.0 | 25.3 | 21.9 | 21.3 | 21.3 | 21.3 | 21.3 | 21.3 | 22.3 | 21.6 |
| Li₂O/R₂O | 0.47 | 0.47 | 0.47 | 0.46 | 0.46 | 0.44 | 0.48 | 0.45 | 0.46 | 0.49 |
| Refractive index (n_{d}) | 1.78 | 1.86 | 1.85 | 1.79 | 1.79 | 1.78 | 1.78 | 1.78 | 1.79 | 1.79 |
| Density (d) [g/cm³] | 3.3 | 3.6 | 3.6 | 3.4 | 3.4 | 3.4 | 3.3 | 3.4 | 3.4 | 3.3 |
| Devitrification temperature [°C] | | | | 1100 | 1050 | 1050 | 1050 | 1050 | 1065 | 1065 |
| Temperature T₂ [°C] | 1092 | 962 | 1005 | 1087 | 1071 | 1086 | 1083 | 1087 | 1070 | 1078 |
| Devitrification viscosity | | | | 1.9 | 2.1 | 2.3 | 2.2 | 2.3 | 2.0 | 2.1 |
| Light transmittance (T₃₆₀) [%] | | | | | | | | | | |
| Glass transition point (Tg) [°C] | 619 | 599 | 627 | 618 | 616 | 619 | 617 | 618 | 610 | 615 |
| Young's modulus (E) [GPa] | | | | | | | | | | |
| Abbe number (vd) | 27 | 24 | 24 | 31 | 31 | 31 | 31 | 31 | 31 | 31 |
| Coefficient of thermal expansion α (50-350°C) [1/K] | 78 | 87 | 79 | 80 | 79 | 80 | 79 | 80 | 82 | 80 |

**[Table 4]**

| mol% | Ex. 31 | Ex. 32 | Ex. 33 | Ex. 34 | Ex. 35 | Ex. 36 | Ex. 37 | Ex. 38 | Ex. 39 |
|---|---|---|---|---|---|---|---|---|---|
| SiO₂ | 56.3 | 56.3 | 56.3 | 44.5 | 47.1 | 40.0 | 40.0 | 35.0 | 39.5 |
| B₂O₃ | 0.5 | 0.5 | 0.5 | 0.5 | 0.5 | 0.5 | 0.5 | 5.5 | 0.5 |
| MgO | | | | | | | | | |
| CaO | | | | | | | | | |
| SrO | | | | | | | | | |
| BaO | | | | | | | | | |
| Li₂O | 10.8 | 10.2 | 11.3 | 12.7 | 13.2 | 14.8 | 14.8 | 12.0 | 15.0 |
| Na₂O | 6.7 | 6.9 | 6.3 | 8.8 | 7.3 | 8.3 | 8.3 | 10.0 | 8.0 |
| K₂O | 4.3 | 4.6 | 4.1 | 5.8 | 4.8 | 5.4 | 5.4 | 6.5 | 6.0 |
| Al₂O₃ | | | | | | | | | |
| Y₂O₃ | | | | | | | | | |
| TiO₂ | | | | | | | | | 3.0 |
| Nb₂O₅ | 18.6 | 18.7 | 18.5 | 24.5 | 24.1 | 28.0 | 25.0 | 28.0 | 25.0 |
| La₂O₃ | | | | | | | | | |
| ZrO₂ | 2.8 | 2.8 | 3.0 | 3.2 | 3.0 | 3.0 | 6.0 | 3.0 | 3.0 |
| ZnO | | | | | | | | | |
| Gd₂O₃ | | | | | | | | | |
| Other high refractive index component | 2.8 | 2.8 | 3.0 | 3.2 | 3.0 | 3.0 | 6.0 | 3.0 | 6.0 |
| R₂O | 21.8 | 21.7 | 21.7 | 27.3 | 25.3 | 28.5 | 28.5 | 28.5 | 29.0 |
| Li₂O/R₂O | 0.50 | 0.47 | 0.52 | 0.47 | 0.52 | 0.52 | 0.52 | 0.42 | 0.52 |
| Refractive index (n_{d}) | 1.78 | 1.78 | 1.78 | 1.86 | 1.86 | 1.90 | 1.88 | 1.90 | 1.89 |
| Density (d) [g/cm³] | 3.3 | 3.3 | 3.3 | 3.6 | 3.6 | 3.7 | 3.7 | 3.7 | 3.6 |
| Devitrification temperature [°C] | 1065 | 1065 | 1075 | | | 1075 | | 1075 | 1075 |
| Temperature T₂ [°C] | 1072 | 1077 | 1068 | 937 | 963 | 876 | 913 | 824 | 883 |
| Devitrification viscosity | 2.1 | 2.1 | 2.0 | | | 1.0 | | 0.8 | 1.0 |
| Light transmittance (T₃₆₀) [%] | 64 | | | | | 34 | 42 | | 34 |
| Glass transition point (Tg) [°C] | 612 | 614 | 613 | 583 | 596 | 579 | 576 | 572 | 567 |
| Young's modulus (E) [GPa] | | | | | | 100 | 98 | | 101 |
| Abbe number (vd) | 31 | 31 | 27 | 24 | 24 | 23 | 24 | 23 | 23 |
| Coefficient of thermal expansion α (50-350°C) [1/K] | 80 | 80 | 79 | 92 | 86 | 92 | 94 | 94 | 96 |

**[Table 5]**

| mol% | Ex. 40 | Ex. 41 | Ex. 42 | Ex. 43 | Ex. 44 |
|---|---|---|---|---|---|
| SiO₂ | 58.6 | 52.6 | 34.6 | 60.6 | 45.5 |
| B₂O₃ | 8.7 | | | | |
| MgO | | 6.3 | | | |
| CaO | 5.0 | 8.8 | 1.8 | | |
| SrO | | 4.0 | | | |
| BaO | | 14.8 | | | 1.0 |
| Li20 | 2.2 | | 26.2 | 20.2 | |
| Na₂O | | | 5.4 | 5.3 | 20.0 |
| K₂O | 9.9 | | 1.1 | 1.1 | |
| Al₂O₃ | | 1.2 | | | |
| Y₂O₃ | | | 0.3 | | |
| TiO₂ | | 7.1 | 5.0 | 6.4 | 27.0 |
| Nb₂O₅ | 12.7 | 2.0 | 20.9 | 6.4 | 6.4 |
| La₂O₃ | | 1.0 | | | |
| ZrO₂ | 0.8 | 2.2 | 2.4 | | |
| ZnO | 1.0 | | 2.4 | | |
| Gd₂O₃ | 1.0 | | | | |
| Other high refractive index component | 1.8 | 25.1 | 7.6 | 6.4 | 28.1 |
| R₂O | 17.1 | 33.9 | 34.4 | 26.6 | 21.0 |
| Li₂O/R₂O | 0.18 | | 0.80 | 0.76 | 0.00 |
| Refractive index (n_{d}) | 1.74 | 1.70 | 1.89 | 1.67 | 1.80 |
| Density (d) [g/cm³] | 3.2 | 3.66 | 3.62 | 2.86 | 3.2 |
| Devitrification temperature [°C] | 1300< | 1070 | 1400< | | |
| Temperature T₂ [°C] | | 1210 | | 1086 | |
| Devitrification viscosity | | | | | |
| Light transmittance (T₃₆₀) [%] | | 64 | | | 15 |
| Glass transition point (Tg) [°C] | 657 | | | | 581 |
| Young's modulus (E) [GPa] | | | 115 | 96 | |
| Abbe number (vd) | | | | | 24 |
| Coefficient of thermal expansion α (50-350°C) [1/K] | 66 | | | | 102 |

The optical glasses in the above Examples (Ex. 1 to 6, 8 to 33, and 35) have high refractive indices (n_{d}) of at least 1.71. Further, they have low density of at most 5.0 g/cm³. Further, since the temperature T₂ at which the viscosity of the glass is logη=2 is from 800 to 1,200°C, the production property is favorable. Accordingly, the optical glasses are suitable as an optical glass to be used for wearable devices, on-vehicle cameras and visual sensors for robot.

On the other hand, the glasses in Ex. 40 and Ex. 42 which are Comparative Examples, have devitrification temperature of higher than 1,300°C and are inferior in production properties. The glasses in Ex. 41 and 43 have refractive index (nd) of lower than 1.71. The glass in Ex. 44 has low light transmittance (T₃₆₀) at wavelength of 360 nm when formed into a glass plate having thickness of 1 mm, since the TiO₂ content is higher than 21.5%.

The optical glasses obtained from molten glass having glass compositions in the above Examples (Ex. 1 to 6, 8 to 33, and 35) include one having no remaining bubble and one having one or two remaining bubbles with sizes of from 13 µm to 53 µm. The aspect ratio (L₂/L₁) of the remaining bubble is substantially at least 0.9 and is 1.0 in some cases. Even from such an optical glass containing remaining bubbles, of which the size is small and the number is small, a glass plate having no defects such as a bubble, a foreign matter, a stria and phase separation can be obtained. Accordingly, by forming a sample having the above-mentioned size, it is possible to obtain an optical glass having LTV of at most 2 µm, a warpage (circular glass plate having a diameter of 15.24 cm (6 inches)) of at most 30 µm and Ra of at most 2 nm. Further, an optical glass having a water resistance (RW) grade of 2 or higher and an acid resistance (RA) grade of 1 or higher, hardly undergoes surface deterioration at the time of polishing and washing, and accordingly with such an optical glass, it is possible to realize LTV of at most 1.5 µm, warpage (a circular glass plate having a diameter of 15.24 cm (6 inches)) of at most 18 µm and Ra of at most 1 nm.

Three types of glass plates having no defects in Examples were subjected to precise polishing, whereupon LTV were 1.0, 1.3 and 1.2 µm, warpage were 44, 35 and 41, and Ra were 0.265, 0.342 and 0.322. Accordingly, by subjecting a glass plate having no defects in Examples of the present invention to precise polishing, it is possible to obtain an optical glass having LTV of at most 2 µm, warpage of at most 50 µm and Ra of at most 2 nm.

When the glass of the present invention is to be chemically tempered, chemical tempering treatment is carried out, for example, by immersing the glass in a melt obtained by heating sodium nitrate to 400°C, for 30 minutes to obtain tempered glass.

### INDUSTRIAL APPLICABILITY

The optical glass of the present invention has high refractive index and a low density, has favorable production properties, and is suitable as an optical glass for wearable devices, for vehicles, for robots, etc. Further, an optical member comprising the optical glass and an antireflection film formed thereon, the antireflection film consisting of a dielectric multilayer film of 4 to 10 layers having low refractive index films of e.g. SiO₂ and high refractive index films of e.g. TiO₂ alternately laminated, is also suitable for wearable devices, for vehicles and for robots.

### REFERENCE SYMBOLS

G1: Glass plate, G1F: one principal plane of glass plate, G1G: the other principal plane of glass plate, G1C: center line of glass plate, G1D: base line of glass plate, G1A: nodal line of optional cross section orthogonal to principal plane G1F, and principal plane G1F, G1B: nodal line of optional cross section orthogonal to principal plane G1G, and principal plane G1G, A: minimum distance in vertical direction between base line G1D and center line G1C, B: maximum distance in vertical direction between base line G1D and center line G1C, C: difference between maximum distance B and minimum distance A

## Claims

1. An optical glass having refractive index (n_{d}) of from 1.71 to 2.00,
density (d) of at most 5.0 g/cm³,
a temperature T₂ at which the viscosity of the glass is logη=2 of from 750 to 1,200°C, and
devitrification temperature of at most 1,300°C, and
which contains, as represented by mol% based on oxides:
TiO₂: 0% to 21.5%,
Nb₂O₅: 3% to 35%,
at least one member selected from the group consisting of BaO, TiO₂, ZrO₂, WOs and Ln₂O₃ (wherein Ln is at least one member selected from the group consisting of Y, La, Gd, Yb and Lu): 0% to 30%, and
SiO₂: 46% to 65%.

2. The optical glass according to Claim 1, which contains, as represented by mol% based on oxides:
Li₂O+Na₂O+K₂O: 6% to 40%, and
Li₂O/(Li₂O+Na₂O+K₂O): at least 0.10 and at most 0.65.

3. The optical glass according to Claim 2, which contains, as represented by mol% based on oxides:
B₂O₃: 0% to 15%,
MgO: 0% to 10%,
CaO: 0% to 25%,
SrO: 0% to 20%,
BaO: 0% to 30%,
Li₂O: 0.6% to 26%,
Na₂O: 0% to 20%,
K₂O: 0% to 10%,
Al₂O₃: 0% to 5%,
WO₃: 0% to 15%,
ZrO₂: 0% to 15%,
ZnO: 0% to 15%, and
La₂O₃: 0% to 20%.

4. The optical glass according to any one of Claims 1 to 3, which has a viscosity at the devitrification temperature (devitrification viscosity) of logη≧0.5.

5. The optical glass according to any one of Claims 1 to 4, which has a light transmittance (T₃₆₀) at wavelength of 360 nm of at least 20%, when formed into a glass plate having thickness of 1 mm.

6. The optical glass according to any one of Claims 1 to 5, which has Young's modulus (E) of at least 60 GPa.

7. The optical glass according to any one of Claims 1 to 6, wherein the water resistance grade is 4 or higher, and the acid resistance grade is 4 or higher, as measured in accordance with Japan Optical Glass Industrial Standards.

8. The optical glass according to any one of Claims 1 to 7, which has glass transition temperature (Tg) of from 500 to 700°C, Abbe number (v_{d}) of at most 60, and coefficient of thermal expansion α at from 50 to 350°C of from 50 to 150×10⁻⁷/K.

9. The optical glass according to any one of Claims 1 to 8, which is in a plate shape having plate thickness of from 0.01 to 2 mm.

10. The optical glass according to Claim 9, wherein one principal plane has an area of at least 8 cm².

11. The optical glass according to Claim 9 or 10, which is a glass plate of which both facing principle planes are polished, and of which LTV in an area of 25 cm² of one principal plane is at most 2 µm.

12. The optical glass according to any one of Claims 1 to 11, wherein when formed into a circular glass plate having a diameter of 8 inches, warpage of one principal plane is at most 50 µm.

13. The optical glass according to any one of Claims 1 to 12, which has a surface roughness Ra of at most 2 nm.

14. An optical member, which comprises the optical glass in a plate shape as defined in any one of Claims 9 to 13.

15. The optical member according to Claim 14, which has an antireflection film on the surface of the optical glass in a plate shape.

## Patentansprüche

1. Optisches Glas mit einem Brechungsindex (n_{d}) von 1,71 bis 2,00,
einer Dichte (d) von höchstens 5,0 g/cm³,
einer Temperatur T₂, bei der die Viskosität des Glases logη=2 beträgt, von 750 bis 1.200°C, und
einer Entglasungstemperatur von höchstens 1.300°C, und
welches in Mol-%, bezogen auf die Oxide, folgendes enthält:
TiO₂: 0% bis 21,5%,
Nb₂O₅: 3% bis 35%,
mindestens ein Mitglied, ausgewählt aus der Gruppe, bestehend aus BaO, TiO₂, ZrO₂, WOs und Ln₂O₃ (wobei Ln mindestens ein Mitglied, ausgewählt aus der Gruppe, bestehend aus Y, La, Gd, Yb und Lu, ist): 0% bis 30%, und
SiO₂: 46% bis 65%.

2. Optisches Glas nach Anspruch 1, welches in Mol-%, bezogen auf die Oxide, folgendes enthält:
Li₂O+Na₂O+K₂O: 6% bis 40%, und
Li₂O/(Li₂O+Na₂O+K₂O): mindestens 0,10 und höchstens 0,65.

3. Optisches Glas nach Anspruch 2, welches in Mol-%, bezogen auf die Oxide, folgendes enthält:
B₂O₃: 0% bis 15%,
MgO: 0% bis 10%,
CaO: 0% bis 25%,
SrO: 0% bis 20%,
BaO: 0% bis 30%,
Li₂O: 0,6% bis 26%,
Na₂O: 0% bis 20%,
K₂O: 0% bis 10%,
Al₂O₃: 0% bis 5%,
WO₃: 0% bis 15%,
ZrO₂: 0% bis 15%,
ZnO: 0% bis 15%, und
La₂O₃: 0% bis 20%.

4. Optisches Glas nach einem der Ansprüche 1 bis 3, welches eine Viskosität bei der Entglasungstemperatur (Entglasungsviskosität) von logη≥0,5 aufweist.

5. Optisches Glas nach einem der Ansprüche 1 bis 4, welches eine Lichtdurchlässigkeit (T₃₆₀) bei einer Wellenlänge von 360 nm von mindestens 20% aufweist, wenn es zu einer Glasplatte mit einer Dicke von 1 mm geformt wird.

6. Optisches Glas nach einem der Ansprüche 1 bis 5, welches einen Young'schen Modul (E) von mindestens 60 GPa aufweist.

7. Optisches Glas nach einem der Ansprüche 1 bis 6, wobei der Wasserbeständigkeitsgrad 4 oder höher beträgt und der Säurebeständigkeitsgrad 4 oder höher beträgt, gemessen nach den "Japan Optical Glass Industrial Standards".

8. Optisches Glas nach einem der Ansprüche 1 bis 7, welches eine Glasübergangstemperatur (Tg) von 500 bis 700°C, eine Abbe-Zahl (v_{d}) von höchstens 60 und einen Wärmeausdehnungskoeffizienten α bei 50 bis 350°C von 50 bis 150x 10⁻⁷/K aufweist.

9. Optisches Glas nach einem der Ansprüche 1 bis 8, welches in Plattenform vorliegt und eine Plattendicke von 0,01 bis 2 mm aufweist.

10. Optisches Glas nach Anspruch 9, wobei eine Hauptebene eine Fläche von mindestens 8 cm² aufweist.

11. Optisches Glas nach Anspruch 9 oder 10, bei welchem es sich um eine Glasplatte handelt, deren beide gegenüberliegenden Hauptebenen poliert sind und deren lokale Dickenvariation (LTV, "Local Thickness Variation") in einem Bereich von 25 cm² einer Hauptebene höchstens 2 µm beträgt.

12. Optisches Glas nach einem der Ansprüche 1 bis 11, wobei, wenn es zu einer kreisförmigen Glasplatte mit einem Durchmesser von 8 Zoll geformt wird, der Verzug einer Hauptebene höchstens 50 µm beträgt.

13. Optisches Glas nach einem der Ansprüche 1 bis 12, welches eine Oberflächenrauhigkeit Ra von höchstens 2 nm aufweist.

14. Optisches Element, welches das optische Glas in Plattenform nach einem der Ansprüche 9 bis 13 umfasst.

15. Optisches Element nach Anspruch 14, welches eine Antireflexionsschicht auf der Oberfläche des optischen Glases in Plattenform aufweist.

## Revendications

1. Verre optique ayant un indice de réfraction (n_{d}) allant de 1,71 à 2,00,
une densité (d) d'au plus 5,0 g/cm³,
une température T₂ à laquelle la viscosité du verre est logη=2 allant de 750 à 1200 °C, et
une température de dévitrification d'au plus 1300 °C, et
qui contient, tel que représenté en % en mole basé sur des oxydes :
TiO₂ : 0 % à 21,5 %,
Nb₂O₅ : 3 % à 35 %,
au moins un élément sélectionné parmi le groupe constitué de BaO, TiO₂, ZrO₂, WO₃ et Ln₂O₃ (dans lequel Ln est au moins un élément sélectionné parmi le groupe constitué de Y, La, Gd, Yb et Lu) : 0 % à 30 %, et
SiO₂ : 46 % à 65 %.

2. Verre optique selon la revendication 1, qui contient, tel que représenté en % en mole basé sur des oxydes :
Li₂O+Na₂O+K₂O : 6 % à 40 %, et
Li₂O/(Li₂O+Na₂O+K₂O) : au moins 0,10 et au plus 0,65.

3. Verre optique selon la revendication 2, qui contient, tel que représenté en % en mole basé sur des oxydes :
B₂O₃ : 0 % à 15 %,
MgO : 0 % à 10 %,
CaO: 0 % à 25 %,
SrO : 0 % à 20 %,
BaO : 0 % à 30 %,
Li₂O : 0,6 % à 26 %,
Na₂O : 0 % à 20 %,
K₂O : 0% à 10%,
Al₂O₃ : 0 % à 5 %,
WO₃ : 0 % à 15 %,
ZrO₂ : 0 % à 15 %,
ZnO : 0 % à 15 %, et
La₂O₃ : 0 % à 20 %.

4. Verre optique selon l'une quelconque des revendications 1 à 3, qui a une viscosité à la température de dévitrification (viscosité de dévitrification) de logη≥0,5.

5. Verre optique selon l'une quelconque des revendications 1 à 4, qui a une transmittance lumineuse (T₃₆₀) à une longueur d'onde de 360 nm d'au moins 20 % lors de sa formation en une plaque de verre ayant une épaisseur de 1 mm.

6. Verre optique selon l'une quelconque des revendications 1 à 5, qui a un module de Young (E) d'au moins 60 GPa.

7. Verre optique selon l'une quelconque des revendications 1 à 6, dans lequel le degré de résistance à l'eau est de 4 ou supérieur et le degré de résistance à l'acide est de 4 ou supérieur, tels que mesurés conformément aux Normes industrielles du verre optique japonaises.

8. Verre optique selon l'une quelconque des revendications 1 à 7, qui a une température de transition vitreuse (Tg) allant de 500 à 700 °C, un nombre d'Abbe (v_{d}) d'au plus 60, et un coefficient de dilatation thermique α à une température allant de 50 à 350 °C allant de 50 à 150×10⁻⁷/K.

9. Verre optique selon l'une quelconque des revendications 1 à 8, qui est en une forme de plaque ayant une épaisseur de plaque allant de 0,01 à 2 mm.

10. Verre optique selon la revendication 9, dans lequel un plan principal a une surface d'au moins 8 cm².

11. Verre optique selon la revendication 9 ou 10, qui est une plaque de verre dont les deux plans principaux se faisant face sont polis, et dont la LTV dans une surface de 25 cm² d'un plan principal est d'au plus 2 µm.

12. Verre optique selon l'une quelconque des revendications 1 à 11, dans lequel le gauchissement d'un plan principal est d'au plus 50 µm lors de sa formation en une plaque de verre circulaire ayant un diamètre de 8 pouces.

13. Verre optique selon l'une quelconque des revendications 1 à 12, qui a une rugosité superficielle Ra d'au plus 2 nm.

14. Élément optique, qui comprend le verre optique en une forme de plaque tel que défini dans l'une quelconque des revendications 9 à 13.

15. Élément optique selon la revendication 14, qui a un film antireflet sur la surface du verre optique en une forme de plaque.
